# FASCICULE DE BREVET EUROPEEN

(11) **EP 1 766 260 B1**
(45) Date de publication et mention de la délivrance du brevet: **18.03.2015**
(21) Numéro de dépôt: 05754107.0
(22) Date de dépôt: 16.06.2005
(51) Int. Cl.: F16D 65/78

(54) **DISQUE DE FREIN VENTILE ET VEHICULE CORRESPONDANT**
BELÜFTETE BREMSVORRICHTUNG UND ENTSPRECHENDES KRAFTFAHRZEUG
VENTILATED BRAKE DISC AND CORRESPONDING VEHICLE

(30) Priorité: 08.07.2004 FR 0407659
(43) Date de publication de la demande: 28.03.2007
(73) Titulaire: Auto Chassis International SNC, 72086 Le Mans Cédex 9 (FR)
(72) Inventeur: GEY, Yves, F-72230 Guecelard (FR)
(74) Mandataire: Rougemont, Bernard
(86) Numéro de dépôt international: PCT/EP2005/052787
(87) Numéro de publication internationale: WO 2006/010671

(56) Documents cités:
- WO-A-02/064992
- WO-A-02/097291
- US-A- 5 526 905
- US-A- 6 119 820
- US-B1- 6 367 598

## Description

L'invention concerne le domaine de l'industrie automobile. Plus précisément, l'invention concerne les disques de frein du type comprenant deux plateaux espacés l'un de l'autre et reliés entre eux par des plots de ventilation.

Un disque de frein doit pouvoir emmagasiner les calories absorbées lors d'un freinage et les restituer suffisamment vite entre deux coups de frein consécutifs.

Ceci a pour but d'éviter de modifier le coefficient de frottement entre la plaquette de frein et le matériau de la piste de freinage du disque, ce qui permet de ne pas modifier sensiblement les distances de freinage.

Dans le domaine de l'invention, on distingue les disques « pleins » ou « massiques » des disques « ventilés ».

Les disques « massiques » sont conçus pour emmagasiner une grande quantité de chaleur. Ils constituent donc des réservoirs de calories de grande capacité, la restitution des calories s'effectuant très lentement.

Les inconvénients de ces disques sont les suivants :
- ils constituent une masse « non suspendue » relativement importante, rarement utilisée totalement ;
- ils engendrent une surconsommation de carburant (du fait de leur poids) ;
- ils engendrent une « pollution » énergétique (de par l'accumulation de calories).

Les disques ventilés comprennent deux plateaux (pistes de freinage) entre lesquels circule un fluide caloporteur et sont conçus pour emmagasiner une faible quantité d'énergie, avec une restitution rapide. Ces disques présentent certes une augmentation d'encombrement par rapport aux disques massiques, mais permettent de :
- réduire la masse « non suspendue » ;
- utiliser de façon optimisée la capacité thermique du disque ;
- diminuer la consommation de carburant ;
- réduire la pollution énergétique.

Cela étant, les éléments de ventilation prévus entre les plateaux doivent être conçus (forme, disposition) pour exploiter au mieux les propriétés de mécanique des fluides vis-à-vis de l'entrée et de la sortie du fluide caloporteur.

On connaît actuellement plusieurs techniques de disques ventilés, la ventilation de ceux-ci étant obtenue avec différents moyens dont l'efficacité est parfois discutable, la justification, en termes d'effet des moyens mis en oeuvre sur la ventilation, n'étant pas toujours clairement établie.

En pratique, les moyens de ventilation sont le plus souvent définis de façon empirique et évoluent au fil des problèmes rencontrés lors de la fabrication et/ou de l'utilisation des pièces.

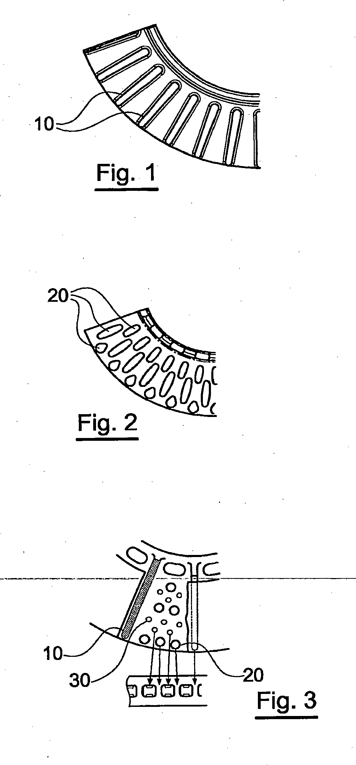

Selon une technique illustrée par la figure 1, les moyens de ventilation sont constitués par des ailettes qui relient les deux pistes de frein et dont l'axe longitudinal (vu de dessus) converge vers le centre de rotation du disque. On parle d'ailettes lorsque la longueur de l'élément de ventilation présente une longueur supérieure ou égale à 50 % de la largeur de la piste de freinage.

Ces ailettes procurent un résultat relativement satisfaisant en termes de surface d'échange thermique par convexion.

Parallèlement, ces ailettes procurent des résultats limités quant à leur capacité à :
- fournir une grande surface d'échange thermique par conduction ;
- accélérer la vitesse de circulation de l'air indépendamment de l'environnement ;
- augmenter le débit d'air.

En revanche, de telles ailettes occasionnent des résultats très peu satisfaisants quant à leur capacité à limiter les déformations de la piste sous l'effet de la température et de la pression exercée par les plaquettes de frein sur le disque.

Pour améliorer les performances de ces ailettes, une variante consiste à réaliser une protubérance arrondie (donnant à l'ailette une forme de goutte d'eau) du côté de la périphérie du disque.

Selon une autre technique illustrée par la figure 2, les moyens de ventilation sont constitués par des plots reliant les deux pistes de frein, avec ou sans axe longitudinal (en présence d'axes longitudinaux, ceux-ci convergeant vers le centre de rotation du disque). On parle de plots lorsque l'encombrement des moyens de ventilation selon une direction radiale est inférieure ou égale à 50% de la largeur de la piste de freinage.

Comme cela apparaît sur la figure 2, les plots 20 peuvent présenter différentes formes : les plots des rangées interne et externe présentent dans le cas présent une forme ovale tandis que les plots de la rangée intermédiaire présentent une forme de losange. **Un disque de frein de ce type a été décrit dans le document** WO2002/097291.

De tels plots procurent des résultats relativement satisfaisants quant à leur capacité à :
- fournir une grande surface d'échange thermique par convexion ;
- fournir une grande surface d'échange thermique par conduction ;
- accélérer la vitesse de circulation de l'air indépendamment de l'environnement ;
- augmenter le débit d'air ;
- limiter les déformations de la piste sous l'effet de la température et de la pression exercée par les plaquettes de frein sur le disque.

Toutefois, les performances d'un tel disque ventilé sont liées au nombre de plots mis en oeuvre.

Or, l'augmentation de ces plots engendrent des problèmes au stade de la fonderie, notamment en ce que la réalisation des noyaux de fonderie devient très complexe.

En outre, on constate avec de tels plots que ceux-ci forment des obstacles à la coulée de la matière dans les moules de fonderie, conduisant à un nombre plus ou moins important de rebuts.

Selon une troisième solution illustrée par la figure 3, les moyens de ventilation comprennent des colonnettes 30 qui s'étendent à partir d'une des pistes mais sans relier celle-ci à l'autre piste. On note que ces colonnettes sont généralement combinées avec des plots 20 et/ou des ailettes 10. Une telle technique présente des résultats limités quant à la capacité à :
- accélérer la vitesse de circulation de l'air indépendamment de l'environnement ;
- augmenter le débit d'air.

**Le document** US 5526905 **décrit un disque de frein selon le préambule de la revendication 1 et comprenant deux plateaux espacés l'un de l'autre et reliés entre eux par des plots de ventilation répartis en rangées circulaires concentriques, dont une première rangée de plots, dite rangée de sortie, par laquelle l'air quitte l'espace entre lesdits plateaux et une deuxième rangée, dite rangée amont, en amont de ladite rangée de sortie selon la direction du flux d'air, lesdits plots étant décalés angulairement d'une rangée à l'autre.**

L'invention a notamment pour objectif de pallier ces inconvénients de l'art antérieur.

Plus précisément, l'invention a pour objectif de proposer un disque de frein ventilé dont les moyens de ventilation permettent de restituer plus rapidement les calories accumulées lors d'un freinage.

L'invention a également pour objectif de fournir un tel disque ventilé qui permette d'augmenter le débit et/ou la vitesse de l'air circulant entre les plateaux du disque.

L'invention a aussi pour objectif de fournir un tel disque ventilé qui permette de réduire les déformations des plateaux susceptibles d'apparaître entre les éléments de ventilation.

L'invention a encore pour objectif de fournir un tel disque ventilé dans lequel des éléments de ventilation proposent une grande surface d'échange thermique, tant par convection que par conduction.

Un autre objectif de l'invention est de fournir un tel disque ventilé qui soit simple de conception et peu onéreux à réaliser.

Encore un autre objectif de l'invention est de fournir un tel disque ventilé qui puisse être fabriqué en fonderie avec un risque réduit d'apparition de rebuts.

Ces objectifs, ainsi que d'autres qui apparaîtront par la suite, sont atteints grâce à l'invention qui a pour objet un disque de frein comprenant deux plateaux espacés l'un de l'autre et reliés entre eux par des plots de ventilation répartis en rangées circulaires concentriques, dont une première rangée de plots, dite rangée de sortie, par laquelle l'air quitte l'espace entre lesdits plateaux et une deuxième rangée, dite rangée amont, en amont de ladite rangée de sortie selon la direction du flux d'air, lesdits plots étant décalés angulairement d'une rangée à l'autre, caractérisé en ce que **lesdits plots de ladite rangée amont délimitent entre eux des espaces dont la largeur se réduit** en **allant vers ladite rangée de sortie** de façon à ménager entre **lesdits plots de ladite rangée de sortie et de ladite rangée amont** une première couronne dans laquelle l'air entrant entre lesdits plateaux est comprimé, **et les plots de la rangée de sortie forment** une deuxième couronne dans laquelle l'air comprimé dans ladite première couronne est aspiré puis évacué dudit espace entre lesdits plateaux.

On obtient de cette façon un disque ventilé dont les moyens de ventilation permettent d'accélérer sensiblement la vitesse et le débit d'air entre les plateaux, indépendamment de l'environnement.

A titre indicatif, un disque ventilé selon l'invention, comprenant par exemple soixante-douze éléments de ventilation, nécessite 160 secondes pour passer d'une température de 450°C à 250°C dans des conditions opératoires déterminées.

Dans ces mêmes conditions opératoires, un disque à plots de l'art antérieur (tel que celui illustré par la figure 2 avec 90 éléments) nécessite 170 secondes et un disque à ailettes (tel que celui illustré par la figure 3 avec 36 éléments) nécessite 190 secondes. En d'autres termes, un disque selon l'invention permet une réduction du temps de refroidissement respectivement de 6% et de 16% par rapport aux deux disques de l'art antérieur qui viennent d'être cités.

Ceci s'explique notamment par la présence d'une couronne de compression en amont de la couronne d'aspiration qui tend à entraîner un effet venturi de nature à accélérer lé débit et la vitesse de l'air.

Par ailleurs, la disposition des plots de ventilation en seulement deux rangées concentriques permet la mise en oeuvre d'un nombre relativement important de plots sans nécessiter la réalisation de noyaux de fonderie complexes et sans risquer des malfaçons comme c'est le cas avec les disques à plots de l'art antérieur.

De plus, on peut disposer les plots de ventilation de telle sorte qu'ils permettent d'envisager une réduction notable des déformations des plateaux sous l'action des plaquettes de frein, de l'outil de coupe d'usinage et des efforts de bridage ou encore sous l'effet des élévations de température des plateaux.

Des tests comparatifs ont été conduits avec les deux disques déjà utilisés pour les comparaisons du temps de refroidissement. Ces tests ont été conduits sous une pression de 100 bars (ce qui correspond à une pression d'étrier de frein) et à une température de 300°C.

Les résultats montrent qu'un disque selon l'invention permet d'envisager des réductions de déformation de près de 100% par rapport aux disques à plots antérieurs et près de 100% par rapport aux disques à ailettes.

En outre, les plots de ventilation d'un disque selon l'invention peuvent être réalisés en nombre et avec des formes tels qu'ils offrent une grande surface d'échange thermique tant par convexion que par conduction.

**Le fait que** lesdits plots de ladite rangée amont délimitent entre eux des espaces dont la largeur se réduit en allant vers ladite rangée de sortie **permet d'obtenir** des zones de compression réparties en une couronne, ceci de façon très simple et efficace.

Selon une solution avantageuse, lesdits plots de ladite rangée de sortie présentent un axe de symétrie correspondant à un rayon dudit disque.

Préférentiellement, lesdits plots de ladite rangée amont présentent préférentiellement une forme oblongue dont le périmètre est délimité par deux extrémités arrondies reliées par deux portions rectilignes, lesdites extrémités arrondies présentant transversalement des dimensions distinctes de façon que lesdits plots présentent entre lesdites extrémités un élargissement progressif.

Selon une autre caractéristique **ne faisant pas partie de la présente invention,** lesdits plots de ladite rangée amont délimitent entre eux des espaces dont la largeur augmente en allant vers la périphérie dudit disque.

De cette façon, les plots de la rangée de sortie et les plots de la rangée amont sont implantés de façon à offrir une résistance accrue dans la zone (comète) la plus chaude du disque au moment du coup de frein.

On créé ainsi des zones d'aspiration de l'air comprimé dans les zones de compression, ceci avec une accélération de l'air due à l'effet venturi mentionné précédemment.

L'air aspiré est directement expulsé, sans obstacle susceptible de ralentir sa vitesse.

Selon une solution avantageuse, lesdits plots de ladite rangée de sortie présentent un axe de symétrie correspondant à un rayon dudit disque.

Préférentiellement, lesdits plots de ladite rangée de sortie présentent préférentiellement une forme oblongue dont le périmètre est délimité par deux extrémités arrondies reliées par deux portions rectilignes, lesdites extrémités arrondies présentant transversalement des dimensions distinctes de façon que lesdits plots présentent entre lesdites extrémités un élargissement progressif.

Selon une solution préférée, l'axe de symétrie de chaque plot d'une rangée est centré angulairement entre les axes de symétrie des plots voisins de l'autre rangée.

La circulation de l'air est ainsi répartie de façon homogène sur l'ensemble de la surface des plateaux.

Selon une solution avantageuse, ladite rangée de sortie et ladite rangée amont sont écartées l'une de l'autre par une couronne intermédiaire.

On ménage ainsi un passage pour la circulation de l'air. De plus, cet espacement entre les rangées de plots permet une bonne circulation également de la coulée de matière dans le moule de fonderie.

En effet, en termes d'écoulement, ce qui est vrai pour l'air l'est également pour le processus de moulage des éléments de ventilation.

Un agencement selon l'invention des plots de ventilation permet donc un meilleur écoulement du mélange sable/résine généralement utilisé pour la réalisation des noyaux.

Cet agencement permet également de diminuer significativement les risques de manque de remplissage.

Selon un mode de réalisation préférentiel, lesdits plots de ladite rangée amont sont disposés de façon que les espaces entre eux sont décalés angulairement par rapport à des orifices d'entrées d'air entre lesdits plateaux.

On créé ainsi une sorte de pompe à air qui contribue à augmenter le débit d'air circulant entre les plateaux.

Selon une solution avantageuse, lesdits plots de ladite rangée de sortie, lesdits plots de ladite rangée amont et des orifices d'introduction d'air entre lesdits plateaux sont disposés les uns par rapport aux autres en quinconce.

Une telle caractéristique engendre un fonctionnement du type de celui d'une turbine, ceci contribuant bien entendu à augmenter (en vitesse et en débit) le flux d'air circulant entre les plateaux.

Un autre avantage d'une telle structure de disque est qu'il n'est pas nécessaire de différencier les disques pour les roues droites de ceux pour les roues gauches.

Selon un premier mode de réalisation, lesdits plots de ladite rangée de sortie, lesdits plots de ladite rangée amont sont répartis selon un pas régulier.

Selon un deuxième mode de réalisation, lesdits plots de ladite rangée de sortie, lesdits plots de ladite rangée amont sont répartis selon un pas variable.

L'invention concerne également un véhicule automobile équipé d'au moins un disque de frein **selon l'invention**.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 à 3 sont des vues partielles de disques ventilés selon l'art antérieur ;
- la figure 4 est une vue en perspective et en coupe partielle d'un disque ventilé selon l'invention ;
- la figure 5 est une vue partielle en coupe d'un disque ventilé selon l'invention ;
- les figures 6 et 7 sont des vues partielles en coupe d'un disque ventilé selon l'invention destinées à illustrer les flux d'air dans le disque ;
- la figure 8 est une autre vue partielle en coupe d'un disque ventilé selon l'invention, destinée à illustrer la répartition des plots par rapport à la zone de chaleur engendrée par un coup de frein ;
- la figure 9 est une vue partielle de disques gauche et droite selon l'invention, destinée à illustrer un effet des plots sur les flux d'air ;
- les figures 10a et 10b sont des vues d'un disque selon l'invention, destinées à illustrer les déformations susceptibles d'apparaître sous l'action d'une garniture de frein ;
- les figures 11a et 11b sont des vues d'un disque selon l'art antérieur, destinées à illustrer les déformations susceptibles d'apparaître sous l'action d'une garniture de frein.

Tel que déjà mentionné précédemment, le principe de l'invention réside dans le fait de prévoir des rangées concentriques de plots, l'une amont, destinée à comprimer l'air entrant dans le disque, et l'autre destinée à aspirer et à évacuer l'air comprimé dans la rangée amont.

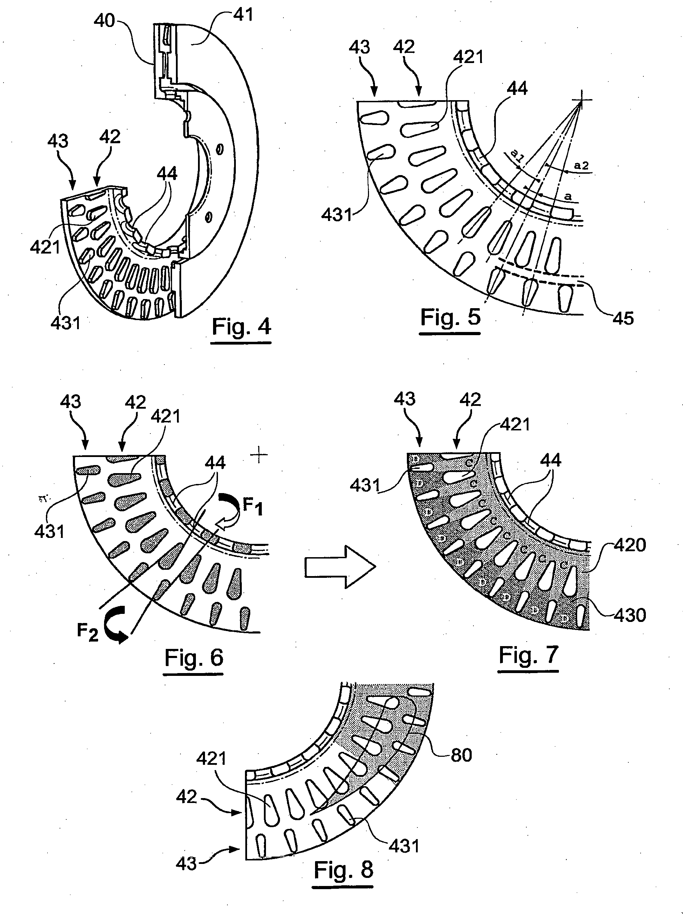

Ceci est illustré par les figures 4, 6 et 7 qui montrent un disque ventilé comprenant deux plateaux (pistes de freinage) 40, 41 reliés entre eux par deux rangées 42, 43 de plots 421, 431.

Par la suite de la description, la rangée 42 de plots est appelée « rangée amont » et la rangée 43 est appelée « rangée de sortie ».

Un tel disque présente en outre des orifices 44 d'introduction (d'admission) d'air entre les plateaux.

Selon le principe de l'invention, les plots 421 de la rangée 42 et les plots 431 de la rangée 43 sont disposés de façon à ménager :
- une première couronne 420 (notée « C » comme « Compression » sur la figure 7) dans laquelle l'air entrant par les orifices 44 (tel qu'indiqué par la flèche F1 sur la figure 6) est comprimé ;
- une deuxième couronne 430 (notée « D » comme « Dépression » sur la figure 7) dans laquelle l'air comprimé dans la couronne 420 est aspiré, puis évacué de l'espace entre les plateaux (comme indiqué par la flèche F2 sur la figure 6).

Selon le présent mode de réalisation, les plots 421 de la rangée amont 42 délimitant entre eux des espaces dont la largeur se réduit en allant vers la couronne 430 (d'où le phénomène de compression de nature à engendrer un effet venturi).

Parallèlement, les plots 431 de la rangée de sortie 43 délimitent entre eux des espaces dont la largeur augmente en allant vers la périphérie du disque (ce qui contribue à entraîner un phénomène de dépression de nature à provoquer l'aspiration de l'air de la couronne 420).

Tel que cela apparaît, les plots 421, 431 des rangées 42, 43 sont répartis entre les plateaux selon un pas régulier (le pas entre les plots pouvant être variable selon une variante envisageable, un pas variable permettant si nécessaire de caler les modes vibratoires des pistes de frein de manière à ne créer ni bruit ni vibration au freinage). On pourra ainsi disposer les plots selon des séquences successives de pas, par exemple avec des écarts angulaires entre plots de 10°, 9°, 8° puis à nouveau de 10°, 9°, 8° etc...

On note que les plots 421, 431 des rangées 42, 43 présentent chacun un axe de symétrie s'étendant radialement à partir du centre de rotation du disque.

Préférentiellement, les plots 421 et 431 présentent une forme oblongue délimitée par deux extrémités arrondies reliées par deux portions rectilignes. En outre, les extrémités arrondies des plots présentent des dimensions distinctes, procurant aux plots une forme qui s'élargit progressivement.

Les plots étant ainsi formés et disposés selon le principe de l'invention, on obtient une implantation conférant un renforcement du disque dans la zone d'échauffement 80 (figure 8), sous forme de comète, engendrée par un coup de frein.

De plus, tel qu'illustré par la figure 5, la répartition régulière des plots 421 et 431 est prévue de telle sorte que l'angle a1 séparant les axes de symétrie de deux plots d'une rangée est égal à l'angle a2 séparant les axes de symétrie de deux plots de l'autre rangée. On note en outre que, selon le présent mode de réalisation, l'angle séparant l'axe de symétrie d'un plot d'une rangée de l'axe de symétrie d'un plot directement voisin de l'autre rangée est égal à la moitié de l'angle a1 (et donc aussi de l'angle a2).

Par ailleurs, les plots 421 de la rangée amont 42 sont préférentiellement disposés de façon que les espaces entre eux sont décalés angulairement par rapport aux orifices 44 d'admission d'air entre les plateaux du disque.

Tel que cela apparaît, la rangée amont est prévue de telle sorte que l'axe de symétrie d'un orifice 44 d'admission d'air coïncide avec l'axe de symétrie d'un plot 421 de la rangée amont, un plot 421 étant intercalé entre deux plots 421 positionnés en regard de deux orifices 44 voisins.

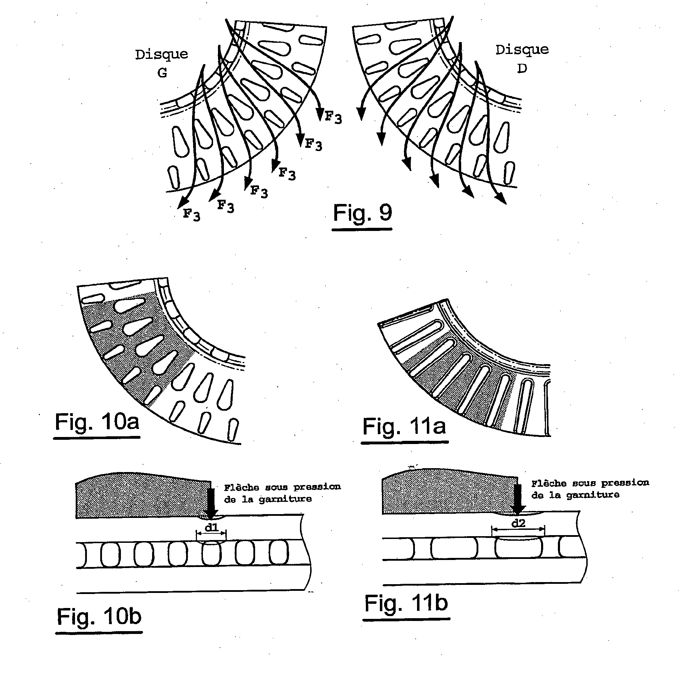

Selon une autre caractéristique, les plots 431 de la rangée de sortie 43, les plots 421 de la rangée amont 42 et les orifices 44 sont placés les uns par rapport aux autres selon une disposition en quinconce (tel que cela est mis en évidence sur la figure 9).

Néanmoins, il est envisageable de décaler les orifices 44 de manière à avoir une entrée d'air maximum en débit et en vitesse si l'aérodynamique du montage de roue le nécessite.

De plus, les orifices 44 n'existent pas dans le cas de frein à architecture « bol droit » (le présent mode de réalisation concernant un disque à bol inversé).

En outre, l'utilisation des plots avec un disque « bol inversé » (tel que représenté sur la figure 4), sans orifices 44 est également possible.

Ainsi, grâce à la structure du disque ventilé qui vient d'être décrit, on obtient un effet « pompe à air », le disque ventilé agissant comme une turbine, tel que l'illustrent les flèches F3 indiquées sur la figure 9.

On note de plus que cet effet est obtenu avec une structure de disque unique, que celui-ci soit monté sur une roue droite ou sur une roue gauche.

On note encore que le disque qui vient d'être décrit permet de réduire les déformations susceptibles d'être subies par les plateaux du disque.

Ceci est illustré par les figures 10a, 10b, 11a et 11b.

Avec un disque à ailettes de l'art antérieur, tel que celui illustré par la figure 11a comprenant classiquement 36 ailettes de ventilation, on constate une déformation correspondante à une flèche sous pression de la garniture susceptible de s'étendre sur une distance d2 (figure 11b).

Avec un disque selon l'invention tel que celui illustré par la figure 10a, comprenant à titre indicatif 72 plots de ventilation, on constate une déformation correspondant à une flèche susceptible de s'étendre sur une distance d1 (figure 10b) notablement inférieure à la distance d2.

Selon encore une autre caractéristique, la rangée de sortie 43 et la rangée amont 42 sont écartées l'une de l'autre par une couronne 45 à l'intérieur de laquelle ne s'étend aucun des plots de l'une ou l'autre des deux rangées. En d'autres termes, les extrémités des plots des deux rangées, dans la zone de passage de la couronne 420 à a couronne 430, ne sont pas alignées sur un cercle commun.

## Revendications

1. Disque de frein comprenant deux plateaux (40), (41) espacés l'un de l'autre et reliés entre eux par des plots de ventilation (421), (431) répartis en rangées circulaires concentriques, dont une première rangée de plots, dite rangée de sortie(43), par laquelle l'air quitte l'espace entre lesdits plateaux et une deuxième rangée, dite rangée amont (42), en amont de ladite rangée de sortie selon la direction du flux d'air, lesdits plots étant décalés (421), (431) angulairement d'une rangée à l'autre, **caractérisé en ce que** lesdits plots (421), de ladite rangée (42) amont **délimitent entre eux des espaces dont la largeur se réduit en allant vers ladite rangée de sortie (43)** de façon à ménager entre **lesdits plots de ladite rangée de sortie et de ladite rangée amont** une première couronne (420) dans laquelle l'air entrant entre lesdits plateaux (40), (41) est comprimé, et **les plots (431) de la rangée de sortie (43) forment** une deuxième couronne (430) dans laquelle l'air comprimé dans ladite première couronne (420) est aspiré puis évacué dudit espace entre lesdits plateaux (40), (41).

2. Disque de frein selon **la revendication 1**, **caractérisé en ce que** lesdits plots (421) de ladite rangée amont (42) présentent un axe de symétrie correspondant à un rayon dudit disque.

3. Disque de frein selon l'une quelconque des revendications 1 **ou 2, caractérisé en ce que** lesdits plots (421) de ladite rangée amont (42) présentent une forme oblongue dont le périmètre est délimité par deux extrémités arrondies reliées par deux portions rectilignes, lesdites extrémités arrondies présentant transversalement des dimensions distinctes de façon que lesdits plots présentent entre lesdites extrémités un élargissement progressif.

4. Disque de frein selon l'une quelconque des revendications 1 à **3, caractérisé en ce que** lesdits plots (431) de ladite rangée de sortie (43) présentent un axe de symétrie correspondant à un rayon dudit disque.

5. Disque de frein selon l'une quelconque des revendications 1 à **4, caractérisé en ce que** lesdits plots (431) de ladite rangée de sortie (43) présente une forme oblongue dont le périmètre est délimité par deux extrémités arrondies reliées par deux portions rectilignes, lesdites extrémités arrondies présentant transversalement des dimensions distinctes de façon que lesdits plots présentent entre lesdites extrémités un élargissement progressif.

6. Disque de frein selon les revendications **2** et **4, caractérisé en ce que** l'axe de symétrie de chaque plot d'une rangée est centré angulairement entre les axes de symétrie des plots voisins de l'autre rangée.

7. Disque de frein selon l'une quelconque des revendications 1 à **6, caractérisé en ce que** ladite rangée de sortie (43) et ladite rangée amont (42) sont écartées l'une de l'autre par une couronne intermédiaire (45).

8. Disque de frein selon l'une quelconque des revendications 1 à **7, caractérisé en ce que** lesdits plots (421) de ladite rangée amont (42) sont disposés de façon que les espaces entre eux sont décalés angulairement par rapport à des orifices (44) d'entrées d'air entre lesdits plateaux (40), (41).

9. Disque de frein selon l'une quelconque des revendications 1 à **8, caractérisé en ce que** lesdits plots (431) de ladite rangée de sortie (43), lesdits plots (421) de ladite rangée amont (42) et des orifices (44) d'introduction d'air entre lesdits plateaux (40), (41) sont disposés les uns par rapport aux autres en quinconce.

10. Disque de frein selon l'une quelconque des revendications 1 à **9, caractérisé en ce que** lesdits plots (431) de ladite rangée de sortie (43), lesdits plots (421) de ladite rangée amont (42) sont répartis selon un pas régulier.

11. Disque de frein selon l'une quelconque des revendications 1 à **9, caractérisé en ce que** lesdits plots (431) de ladite rangée de sortie (43), lesdits plots (421) de ladite rangée amont (42) sont répartis selon un pas variable.

12. Véhicule automobile équipé d'au moins un disque de frein **selon l'une des revendications 1 à 11**.

## Patentansprüche

1. Bremsscheibe, umfassend zwei Platten (40), (41), die voneinander beabstandet sind und durch Ventilationsnoppen (421), (431) miteinander verbunden sind, welche in konzentrischen, kreisförmigen Reihen, darunter einer ersten Noppenreihe, der so genannten Austrittsreihe (43), durch die die Luft den Raum zwischen den Platten verlässt, und einer zweiten Reihe, der so genannten stromaufwärtigen Reihe (42), die sich in Luftstromrichtung stromaufwärts der Austrittsreihe befindet, verteilt sind, wobei die Noppen von einer Reihe zur anderen winkelförmig versetzt sind (421), (431), **dadurch gekennzeichnet, dass** die Noppen (421) der stromaufwärtigen Reihe (42) zwischen sich Räume begrenzen, deren Breite in Richtung der Austrittsreihe (43) schmaler wird, so dass zwischen den Noppen der Austrittsreihe und der stromaufwärtigen Reihe ein erster Ring (420) gebildet wird, in dem zwischen den Platten (40), (41) eintretende Luft komprimiert wird, und die Noppen (431) der Austrittsreihe (43) einen zweiten Ring (430) bilden, in den die in dem ersten Ring (420) komprimierte Luft angesaugt und dann aus dem Raum zwischen den Platten (40), (41) abgeführt wird.

2. Bremsscheibe nach Anspruch 1, **dadurch gekennzeichnet, dass** die Noppen (421) der stromaufwärtigen Reihe (42) eine Symmetrieachse aufweisen, die einem Radius der Scheibe entspricht.

3. Bremsscheibe nach Anspruch 1 oder 2, **dadurch gekennzeichnet, dass** die Noppen (421) der stromaufwärtigen Reihe (42) eine längliche Form aufweisen, deren Umfang durch zwei abgerundete Enden begrenzt wird, die durch zwei geradlinige Teile verbunden sind, wobei die abgerundeten Enden in Querrichtung verschiedene Abmessungen aufweisen, so dass die Noppen zwischen den Enden eine zunehmende Verbreiterung aufweisen.

4. Bremsschreibe nach einem der Ansprüche 1 bis 3, **dadurch gekennzeichnet, dass** die Noppen (431) der Austrittsreihe (43) eine Symmetrieachse aufweisen, die einem Radius der Scheibe entspricht.

5. Bremsschreibe nach einem der Ansprüche 1 bis 4, **dadurch gekennzeichnet, dass** die Noppen (431) der Austrittsreihe (43) eine längliche Form aufweisen, deren Umfang durch zwei abgerundete Enden begrenzt wird, die durch zwei geradlinige Teile verbunden sind, wobei die abgerundeten Enden in Querrichtung verschiedene Abmessungen aufweisen, so dass die Noppen zwischen den Enden eine zunehmende Verbreitung aufweisen.

6. Bremsschreibe nach den Ansprüchen 2 und 4, **dadurch gekennzeichnet, dass** die Symmetrieachse jeder Noppe einer Reihe winkelförmig zwischen den Symmetrieachsen der benachbarten Noppen der anderen Reihe zentriert ist.

7. Bremsschreibe nach einem der Ansprüche 1 bis 6, **dadurch gekennzeichnet, dass** die Austrittsreihe (43) und die stromaufwärtige Reihe (42) durch einen Zwischenring (45) voneinander beabstandet sind.

8. Bremsschreibe nach einem der Ansprüche 1 bis 7, **dadurch gekennzeichnet, dass** die Noppen (421) der stromaufwärtigen Reihe (42) so angeordnet sind, dass die Räume zwischen ihnen bezüglich Lufteintrittsöffnungen (44) zwischen den Platten (40), (41) winkelförmig gegeneinander versetzt sind.

9. Bremsschreibe nach einem der Ansprüche 1 bis 8, **dadurch gekennzeichnet, dass** die Noppen (431) der Austrittsreihe (43), die Noppen (421) der stromaufwärtigen Reihe (42) und die Lufteintrittsöffnungen (44) zwischen den Platten (40), (41) zueinander verschoben angeordnet sind.

10. Bremsschreibe nach einem der Ansprüche 1 bis 9, **dadurch gekennzeichnet, dass** die Noppen (431) der Austrittsreihe (43) und die Noppen (421) der stromaufwärtigen Reihe (42) gemäß einem gleichmäßigen Abstand verteilt sind.

11. Bremsschreibe nach einem der Ansprüche 1 bis 9, **dadurch gekennzeichnet, dass** die Noppen (431) der Austrittsreihe (43) und die Noppen (421) der stromaufwärtigen Reihe (42) gemäß einem variablen Abstand verteilt sind.

12. Kraftfahrzeug, das mit mindestens einer Bremsscheibe nach einem der Ansprüche 1 bis 11 ausgestattet ist.

## Claims

1. Brake disk comprising two mutually spaced plates (40, 41) connected one to the other by ventilation studs (421, 431) distributed in concentric circular rows, comprising a first row of studs, known as the outlet row (43), through which the air leaves the space between said plates, and a second row, known as the upstream row (42), upstream of said outlet row in the direction of the air flow, said studs being angularly offset (421, 431) from one row to the other, **characterized in that** said studs (421) of said upstream row (42) delimit between them spaces, the width of which decreases in the direction of said outlet row (43) so as to provide between said studs of said outlet row and of said upstream row a first ring (420), in which the air entering between said plates (40, 41) is compressed, and the studs (431) of the outlet row (43) form a second ring (430), in which the compressed air in said first ring (420) is aspirated, then evacuated from said space between said plates (40, 41).

2. Brake disk according to Claim 1, **characterized in that** said studs (421) of said upstream row (42) have an axis of symmetry corresponding to a radius of said disk.

3. Brake disk according to either one of Claims 1 and 2, **characterized in that** said studs (421) of said upstream row (42) have an oblong shape, the perimeter of which is delimited by two rounded ends connected by two rectilinear portions, said rounded ends having, transversely, distinct dimensions, such that said studs have a progressive widening between said ends.

4. Brake disk according to any one of Claims 1 to 3, **characterized in that** said studs (431) of said outlet row (43) have an axis of symmetry corresponding to a radius of said disk.

5. Brake disk according to any one of Claims 1 to 4, **characterized in that** said studs (431) of said outlet row (43) have an oblong shape, the perimeter of which is delimited by two rounded ends connected by two rectilinear portions, said rounded ends having, transversely, distinct dimensions, such that said studs have a progressive widening between said ends.

6. Brake disk according to Claims 2 and 4, **characterized in that** the axis of symmetry of each stud of a row is angularly centered between the axes of symmetry of the adjacent studs of the other row.

7. Brake disk according to any one of Claims 1 to 6, **characterized in that** said outlet row (43) and said upstream row (42) are separated from one another by an intermediate ring (45).

8. Brake disk according to any one of Claims 1 to 7, **characterized in that** said studs (421) of said upstream row (42) are arranged such that the spaces between them are angularly offset in relation to the air inlet openings (44) between said plates (40, 41).

9. Brake disk according to any one of Claims 1 to 8, **characterized in that** said studs (431) of said outlet row (43), said studs (421) of said upstream row (42) and air inlet openings (44) between said plates (40, 41) are arranged staggered in relation to one another.

10. Brake disk according to any one of Claims 1 to 9, **characterized in that** said studs (431) of said outlet row (43), said studs (421) of said upstream row (42) are distributed according to a regular pitch.

11. Brake disk according to any one of Claims 1 to 9, **characterized in that** said studs (431) of said outlet row (43), said studs (421) of said upstream row (42) are distributed according to a variable pitch.

12. Automotive vehicle equipped with at least one brake disk according to one of Claims 1 to 11.
